(19) **Europäisches Patentamt / European Patent Office / Office européen des brevets**

(11) **EP 3 142 770 B1**

(12) **FASCICULE DE BREVET EUROPEEN**

(45) Date de publication et mention
de la délivrance du brevet:
**30.09.2020 Bulletin 2020/40**

(21) Numéro de dépôt: **15728056.1**

(22) Date de dépôt: **13.05.2015**

(51) Int Cl.:
**B01D 46/44** *(2006.01)* **B01D 46/00** *(2006.01)*

(86) Numéro de dépôt international:
**PCT/FR2015/051257**

(87) Numéro de publication internationale:
**WO 2015/173515 (19.11.2015 Gazette 2015/46)**

(54) **PROCÉDÉ DE CONTRÔLE EN LIGNE DE L'INTÉGRITÉ D'UN SYSTÈME FILTRANT**

VERFAHREN ZUR INLINE-STEUERUNG DER INTEGRITÄT EINES FILTERUNGSSYSTEMS

METHOD FOR IN-LINE CONTROL OF THE INTEGRITY OF A FILTERING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2014 FR 1454355**

(43) Date de publication de la demande:
**22.03.2017 Bulletin 2017/12**

(73) Titulaire: **Roquette Frères**
**62136 Lestrem (FR)**

(72) Inventeur: **SEGARD, David**
**62136 Lestrem (FR)**

(74) Mandataire: **Plasseraud IP**
**66, rue de la Chaussée d'Antin**
**75440 Paris Cedex 09 (FR)**

(56) Documents cités:
**WO-A1-2013/049109 US-A1- 2009 145 111**

**Description**

La présente invention est relative à un procédé de contrôle en ligne de l'intégrité d'un système filtrant. Le domaine de l'invention est celui des processus industriels comportant une étape de filtration d'un gaz au travers d'un système filtrant.

L'invention trouvera une application particulière dans les processus industriels mettant en œuvre une filtration afin de stériliser un gaz, tel que par exemple de l'air, et en particulier les processus industriels de fermentation.

Dans le domaine de la fermentation, il est connu de l'état de la technique des installations comprenant un réacteur de fermentation, ci-après désigné « fermenteur », dans lequel se déroule la réaction de fermentation, généralement dans des conditions de température et d'agitation contrôlées. Ces installations comprennent des compresseurs et des conduites qui acheminent un gaz, en l'espèce de l'air, dans l'installation de fermentation, en contact avec le produit fermentescible, ou encore en contact avec une matière destinée à alimenter la réaction de fermentation.

Ainsi, l'air peut être acheminé directement dans la cuve du fermenteur, en particulier lorsque l'on désire une fermentation en milieu aérobie. Alternativement ou additionnellement le gaz peut servir pour le transport pneumatique d'une matière riche en carbone telle que le glucose destinée à être acheminée au réacteur de fermentation. Dans ce cas, le gaz permet de pousser la matière, à partir d'un réservoir de stockage et jusqu'à la cuve du fermenteur.

Dans les deux cas, le gaz doit être stérilisé afin d'éviter toute contamination (directe ou indirecte) des produits dans le fermenteur. A cet effet, l'installation comprend des systèmes filtrant sur le circuit de gaz qui ont pour fonction de stériliser le gaz en retenant les bactéries en suspension. Ce type de système comprend en pratique un carter recevant une pluralité de cartouches filtrantes, dites stérilisantes. Ces cartouches stérilisantes se caractérisent par leur capacité à retenir des bactéries dont la taille de particules est de l'ordre du dixième de micromètre.

Ces cartouches filtrantes sont des consommables et doivent être changées lorsque trop encrassées. Dans certains processus industriels et en particulier dans les processus de fermentation, il est impératif de changer les cartouches filtrantes avant un encrassement trop important du média filtrant. Ces cartouches fortement encrassées entrainent des pertes énergétiques et des pertes de débit liées à la perte de charge. Il est aussi impératif de changer les cartouches filtrantes avant la détérioration du filtre (liée au vieillissement, à un coup de pression) qui engendre des risques de largage des fibres et/ ou des contaminations. Pour certaines fermentations industrielles, l'apparition d'une contamination est rédhibitoire et implique de vider le fermenteur, de mettre son contenu au rebus, puis de stériliser l'installation de fermentation avant la mise en œuvre d'une nouvelle production. Les contaminations provoquent des arrêts de production conséquents.

Afin d'éviter un tel désagrément, il est d'usage de renouveler périodiquement les cartouches filtrantes, de manière préventive, sans connaître réellement leur état d'intégrité. Ainsi, et pour les fermentations industrielles, la présente Demanderesse procède à un changement des cartouches périodiquement tous les 12 mois.

L'homme du métier dans le domaine de la filtration connaît par ailleurs différents tests pour le contrôle d'un filtre, et en particulier :

1) Le test de point de bulles : ce test permet de détecter la présence de fuites au travers du filtre. Le filtre est tout d'abord immergé dans une solution eau/éthanol, puis soumis à une pression déterminée, fixe. L'observation d'un bullage révèle une fuite.

2) Le test de diffusion : La cartouche doit être mouillée par une solution eau/éthanol. On applique une pression et on quantifie le débit passant par une mesure précise.

3) Le test de maintien de pression : La cartouche doit être mouillée par une solution par exemple eau/éthanol. On applique une pression et on observe la perte de cette pression sur un temps donné.

4) Le test d'intrusion à l'eau : ce test couramment dénommé WIT (pour «Water Intrusion Test») permet de tester les cartouches stérilisantes sans alcool, seulement avec de l'eau.

5) Le test aérosol: Ce test nécessite la diffusion d'un aérosol de particules (brouillard d'huile), entre 0,2 et 0,3 micromètres, puis le comptage laser en sortie des particules ayant traversé le filtre.

Ces différents tests présentent les inconvénients suivants :

- ils ne sont pas toujours réalisables pour tous les types de cartouche filtrante à gaz,
- ils demandent l'accès à des caractéristiques propres de la cartouche filtrante que le fabricant peut garder secrètes,
- ils nécessitent pour la plupart un prétraitement des cartouches avant le test (i.e un mouillage).

En outre l'ensemble de ces tests nécessite bien souvent d'extraire la cartouche filtrante de son caisson, avant de réaliser le test. Dans tous les cas, aucun des tests précités ne permet de contrôler l'intégrité d'un système filtrant, en ligne, c'est-à-dire, pendant la filtration du gaz pour la mise en œuvre du processus industriel. WO2013/049109 divulgue un procédé de contrôle en ligne.

On connait encore de l'état de la technique, dans les systèmes de filtration d'utiliser des manomètres pour connaître l'état du filtre. Selon les constatations des inventeurs, les manomètres utilisés pour cette application présentent une sensibilité de +/-250 millibars (25000 Kilo Pascals) et permettent uniquement d'observer que les filtres du système filtrant sont arrivés à leur perte de charge maximale (donnée fournie par le fabriquant de la cartouche filtrante), avec risque de colmatage, de surconsommation, de diminution du débit, de blocage de la fermentation.

Selon les constatations des inventeurs, et préalablement à un défaut d'intégrité, l'utilisation de cartouches filtrantes présentant un encrassement important génère une perte de charge qui entraîne une surconsommation électrique des compresseurs utilisés pour acheminer le gaz et réaliser la filtration. Dans les processus industriels pour lesquels le débit de gaz (débit normal) est typiquement largement supérieur à 100 $Nm^3$/H, voire bien souvent supérieur à 1000$Nm^3$/H, cette perte de charge se traduit par un surcout de consommation électrique conséquent.

Le but de la présente invention est de pallier tout ou partie des inconvénients précités en proposant un procédé de contrôle de l'intégrité d'un système filtrant, en ligne, permettant ainsi de vérifier l'intégrité du système filtrant au cours dudit processus industriel, lors de la mise en œuvre de la filtration au travers dudit système filtrant.

Plus particulièrement, et dans le cas d'un système de filtration à cartouches filtrantes stérilisantes, un objectif de l'invention est de proposer un tel procédé de contrôle qui permet d'avertir l'utilisateur de la nécessité de changer les cartouches filtrantes, avant qu'une contamination soit à déplorer.

Un autre but de la présente invention est de proposer un tel procédé de contrôle qui peut être mis en œuvre, avantageusement, sans connaître les spécificités techniques intrinsèques des cartouches filtrantes du système.

Un autre but de la présente invention, est, au moins à titre d'un mode de réalisation, de proposer un procédé de contrôle en ligne qui permette d'avertir l'utilisateur de la nécessité de changer les cartouches filtrantes, et dans le but d'éviter une surconsommation des compresseurs mis en œuvre pour réaliser la filtration.

D'autres avantages de la présente invention apparaitront au cours de la description qui va suivre qui n'est donnée qu'à titre indicatif et qui n'a pas pour but de la limiter.

L'invention concerne un procédé de contrôle en ligne de l'intégrité d'un système filtrant mis en œuvre au cours d'un processus industriel comportant la filtration d'un gaz au travers dudit système filtrant, ledit système filtrant comprenant au moins une cartouche filtrante,
ledit procédé comprenant une étape préalable de mesure de la différence de pression représentative de la perte de charge engendrée par le système filtrant lorsque ladite au moins une cartouche filtrante est neuve, et une étape d'étalonnage au cours de laquelle on détermine, en fonction de ladite différence de pression $\Delta P0$ mesurée, un seuil haut représentatif d'un encrassement de ladite au moins une cartouche filtrante et un seuil bas représentatif d'une fuite de ladite au moins une cartouche filtrante, , ledit seuil haut étant supérieur à $\Delta P0$, la valeur du seuil haut comprise entre $1.3^*\Delta P0$ et $3^*\Delta P0$, et ledit seuil bas inférieur à $\Delta P0$, la valeur du seuil bas comprise entre $0.7^*\Delta P0$ et $0.95^*\Delta P0$, procédé comportant au moins les étapes suivantes :

- une étape de mesure au cours de laquelle on mesure une différence de pression $\Delta P$ représentative de la perte de charge engendrée par le système filtrant,
- une étape de test au cours de laquelle on compare ladite mesure au seuil haut, prédéterminé, et au seuil bas, prédéterminé, de sorte à considérer ladite au moins une cartouche filtrante non conforme lorsque la différence de pression mesurée à l'étape de mesure sort d'une plage comprise entre ledit seuil haut et ledit seuil bas.

L'invention sera mieux comprise à la lecture de la description suivante accompagnée des dessins en annexe parmi lesquels :

- La figure 1 est une vue schématique d'une installation pour la mise œuvre d'un processus industriel de fermentation et sur laquelle on met en œuvre le procédé de contrôle conforme à l'invention.
- La figure 2 est un graphique représentant en ordonnée la différence de pression $\Delta P$ mesurée, et en abscisse le temps, avec déclenchement d'un signal d'avertissement encrassement.
- La figure 3 est un graphique représentant en ordonnée la différence de pression $\Delta P$ mesurée, et en abscisse le temps, avec déclenchement d'un signal d'avertissement fuite.
- La figure 4 est un graphique représentant en ordonnée la différence de pression $\Delta P$ mesurée, et en abscisse le temps, dont la courbe présente une brusque variation interprétée comme une anomalie (par exemple dé-colmatage ou fuite).
- La figure 5 est un diagramme illustrant les différentes étapes d'un procédé conforme à l'invention, étapes qui peuvent être mises en œuvre automatiquement par des moyens informatiques.
- La figure 6 est une photo d'un système filtrant dont le carter reçoit vingt cartouches filtrantes, du type stérilisante.
- La figure 7 est une photo d'un banc de test réalisé par la présente Demanderesse pour confirmer la pertinence du procédé contrôle selon l'invention.

L'invention est née de la volonté de la présente Demanderesse d'obtenir une meilleure surveillance de la stérilité des gaz entrant en contact avec les produits dans les fermentations industrielles, et en particulier des fermentations sensibles aux contaminations.

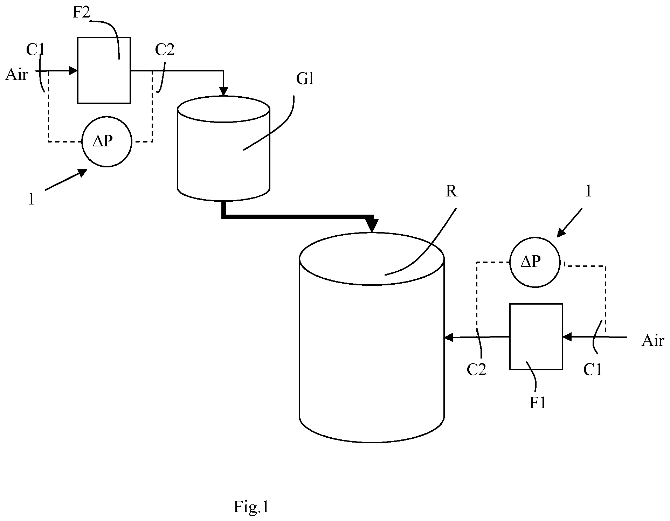

La figure 1 illustre schématiquement une installation de fermentation qui comprend un réacteur de fermentation R, encore appelé fermenteur. Le fermenteur comprend une cuve à l'intérieur de laquelle se déroule la fermentation des produits fermentescibles, sous conditions contrôlées. Un tel fermenteur peut comprendre typiquement des échangeurs afin de contrôler la température de la réaction, et un couple rotor/stator pour agiter les produits dans la cuve.

L'installation peut comprendre une source d'air comprimée et une conduite acheminant de l'air directement au réacteur de fermentation R. Afin d'éviter la contamination des produits fermentescibles, cet air est filtré préalablement à son entrée dans le réacteur par un système filtrant repéré F1. Un tel système filtrant F1 comprend typiquement un carter avec une entrée pour le gaz non filtré, et une sortie pour le gaz filtré. Dans ce carter sont reçus de manière amovible un ensemble de cartouches filtrantes, typiquement agencées de manière à réaliser une filtration des gaz en parallèle.

L'installation peut encore comprendre un réservoir GI pour une matière riche en carbone, typiquement du glucose. Une autre conduite de gaz, reliée à la source d'air comprimée relie le réservoir GI et a pour fonction de pousser la matière contenue dans le réservoir GI dans un tuyau et jusqu'au réacteur de fermentation. Préalablement à son entrée dans le réservoir GI, cet air est filtré dans un autre système filtrant F2, afin d'éviter de contaminer la matière riche en carbone.

Afin d'éviter les contaminations on utilise, respectivement aux systèmes filtrant F1 et F2, des cartouches filtrantes dites stérilisantes dont le diamètre des pores est inférieur ou égal à 0,22 $\mu$m, permettant la rétention des micro-organismes. Au cours de la fermentation, il est important de surveiller l'intégrité des cartouches afin d'éviter l'apparition de contamination. Celles-ci apparaissent lorsque les cartouches sont non intègres : une cartouche non intègre peut être le résultat d'un passage préférentiel (une fuite). Encore, une cartouche non intègre peut être le résultat d'un encrassement trop important, très souvent accompagné d'un risque important de largage des fibres du média-filtrant.

Afin d'éviter tout désagrément, et à la connaissance des inventeurs, il est d'usage de renouveler périodiquement les cartouches filtrantes, sans connaître précisément leur état d'intégrité, de manière préventive, par exemple tous les 12 mois.

Désirant obtenir une surveillance en ligne de son processus, la présente Demanderesse s'est rapprochée des différents acteurs spécialisés dans les filtrations stérilisantes, à savoir les fabricants de cartouches stérilisantes pour gaz et appareils de test de l'intégrité de telles cartouches à gaz.

Les solutions proposées par ces acteurs se sont limitées aux solutions de test précédemment évoquée, à savoir « *test de point de bulles* », « *test de maintien de pression* », « *test de diffusion* », « *test d'introduction à l'eau* », et le « *test d'aérosol* ». Aucune de ces solutions n'a été retenue, en raison des inconvénients précités et de leurs coûts de mise en œuvre très important. En outre, aucun des tests précités ne permet de contrôler l'intégrité d'un système filtrant, en ligne, c'est-à-dire, lors de la filtration du gaz par le système filtrant et pour les besoins du processus industriel.

Il est du mérite de la présente Demanderesse d'avoir conçu un procédé de contrôle de l'intégrité d'un système filtrant (F) qui permette de surveiller l'intégrité du système filtrant, en ligne, c'est-à-dire sans perturber le processus industriel et la filtration de gaz réalisée lors de ce processus.

L'invention trouve une application particulière pour la surveillance des systèmes filtrants mis en œuvre dans une fermentation industrielle, en particulier mis en œuvre dans une installation du type de celle illustrée à la figure 1. Toutefois le procédé de contrôle de l'intégrité n'est pas limité à ce processus industriel et peut trouver une application particulière dans d'autres processus industriels, et notamment ceux où l'on rencontre des exigences similaires sur le gaz filtré.

Aussi l'invention est relative à un procédé de contrôle de l'intégrité d'un système filtrant F1 ; F2, ledit système filtrant F1; F2 comprenant au moins une cartouche filtrante, à savoir une cartouche filtrante, ou encore, de préférence, plusieurs cartouches filtrantes. Dans ce dernier cas, les cartouches filtrantes assurent de préférence une filtration en parallèle du gaz.

Il s'agit d'un procédé en ligne mis en œuvre au cours d'un processus industriel comportant la filtration d'un gaz tel que l'air au travers du système filtrant F1 ; F2. Ce test est donc réalisé pendant la filtration des gaz pour le besoin du processus industriel, au débit de fonctionnement du processus, qui est de préférence un débit sensiblement constant. Ce débit (débit normal) peut être supérieur ou égal à 100 Nm$^3$/H, voire bien souvent supérieur ou égal à 1000 Nm$^3$/H.

Dans le cas où le système filtrant F1 ; F2 comprend une pluralité de cartouches filtrantes, ladite différence de pression mesurée à l'étape de mesure S1 est représentative de la perte de charge engendrée par l'ensemble des cartouches filtrantes.

L'invention est née de la volonté de la présente Demanderesse de contrôler l'intégrité du système filtrant en surveillant de manière précise la perte de charge générée par le système filtrant, au cours de la filtration réalisée pour les besoins du processus industriel, au débit de fonctionnement de gaz du processus.

L'invention permet ainsi d'assurer un suivi en continu, tout au long de la fermentation, et garantit l'intégrité et la stérilité du circuit pendant son fonctionnement.

Selon l'invention, ledit procédé comporte ainsi une étape de mesure S1 au cours de laquelle on mesure une différence de pression ΔP représentative de la perte de charge engendrée par le système filtrant F1 ; F2.

A cet effet, on utilise de préférence un dispositif de mesure d'une différence de pression, ledit dispositif présentant une première connexion de pression C1, en aval du système filtrant et une seconde connexion de pression C2, en amont du système de pression. La différence de pression mesurée ΔP est la différence de pression entre la première connexion C1 et la deuxième connexion C2. Ce dispositif de mesure se distingue des manomètres couramment utilisés dans de tel processus comme témoin de la fin de vie, par la sensibilité de mesure qui peut être inférieure à ou égale à 10 millibars (1000 Pascals), de préférence inférieure à 7,5 millibars (750 Pascals).

On entend ici par sensibilité de la mesure la plus petite quantité que le dispositif de mesure est capable de discerner. Après plusieurs expérimentations, les inventeurs ont déterminé qu'un dispositif de mesure de sensibilité inférieure à 750 Pascals, voire inférieure ou égale à 300 Pascals, voire une sensibilité comprise entre 50 Pascals et 300 Pascals représentait un bon compromis, entre le coût du dispositif et le procédé de contrôle à mettre en œuvre.

En pratique, cette sensibilité a été déterminée par les inventeurs comme un pourcentage de l'ordre de 5% (ou inférieur) de la valeur ΔP0 représentative de la perte de charge engendrée par le système filtrant lorsque ladite au moins une cartouche filtrante est neuve. Typiquement et dans un système filtrant à carter regroupant et recevant une pluralité de cartouches filtrantes, il est d'usage d'obtenir des valeurs pour ΔP0 voisine de 100 millibars (10 000 Pascals) par exemple comprise entre 50 millibars (5 000 Pascals) et 150 millibars (15000 Pascals).

L'échelle de mesure du dispositif s'étend de préférence sur une plage d'étendue comprise entre 75 000 Pascals et 450 000 Pascals, de préférence entre 75 000 Pascals et 300 000 Pascals, et encore plus préférentiellement comprise entre 100 000 Pascals et 200 000 Pascals. L'étendue de l'échelle de mesure a été déterminée par les inventeurs en relation avec la vapeur ΔP0 représentative de la perte de charge engendrée par le système filtrant lorsque ladite au moins une cartouche filtrante est neuve. L'étendue de plage de cette échelle est de préférence déterminée de telle façon à pouvoir suivre la variation de la mesure ΔP au moins sur une plage d'étendue comprise entre une borne inférieure nulle (0*ΔP0) et une borne supérieure comprise entre 1.5*ΔP0 et 3*ΔP0, et de préférence comprise entre 1.5*ΔP0 et 2*ΔP0. Par exemple, l'échelle s'étend entre 0 Pascal et 150 000 Pascals.

Le procédé comporte également la définition d'un seuil haut Sh, prédéterminé, représentatif d'un certain encrassement et/ou d'un seuil bas Sb, représentatif d'un passage préférentiel (une fuite).

Le procédé comporte, encore, une étape de test au cours de laquelle on compare ladite mesure S1 au seuil haut Sh, prédéterminé, et au seuil bas Sb prédéterminé de sorte à considérer ladite au moins une cartouche filtrante non conforme lorsque la différence de pression mesuré à l'étape de mesure S1 sort d'une plage comprise entre ledit seuil haut Sh et ledit seuil bas Sb.

Dans le cas d'un système filtrant comportant plusieurs cartouches filtrantes, l'ensemble des cartouches est considéré non conforme.

Ainsi et lorsque la mesure de différence de pression atteint ou dépasse le seuil haut Sh, ladite au moins une cartouche filtrante est considérée non conforme. Il est alors conseillé de la remplacer par une cartouche neuve. Il est important de noter que ce seuil haut est toutefois déterminé à une valeur de ΔP représentative d'une cartouche filtrante intègre en particulier une cartouche stérilisante intègre (reps. ou représentative d'un ensemble de cartouches filtrantes intègres dans le cas d'un système filtrant à plusieurs cartouches). Selon un mode de réalisation avantageux, qui est développé par la suite, ce seuil haut Sh est déterminé, en outre, suffisamment bas, dans le but d'éviter des surconsommations électriques des compresseurs générant le flux de gaz à filtrer.

Lorsque la mesure de différence de pression atteint ou descend sous le seuil bas Sb, ladite au moins une cartouche filtrante présente un risque de passage préférentiel (une fuite). Ladite cartouche est considérée comme non intègre et donc non conforme. Dans le cas d'un système filtrant à plusieurs cartouches filtrantes, c'est l'ensemble des cartouches filtrantes qui est considéré non intègre. Dans cet ensemble, tout ou partie des cartouches filtrantes peuvent être non intègres. Le procédé peut alors être suivi d'une étape d'identification de la ou des cartouches filtrantes non intègre(s) dans cet ensemble, après leurs retrait du système filtrant.

Selon l'invention, le procédé peut comprendre une étape préalable de mesure de la différence de pression ΔP0 représentative de la perte de charge engendrée par le système filtrant lorsque ladite au moins une cartouche filtrante est neuve. Avantageusement, le procédé comporte une étape d'étalonnage au cours de laquelle on détermine, notamment par calcul, ledit seuil haut Sh et/ou le seuil bas Sb en fonction ladite différence de pression ΔP0 mesurée.

Ainsi, le seuil haut Sh et le seuil bas peuvent être définis par les formules suivantes :

$$Sh = f(\Delta P0)$$

et

$$Sb=g(\Delta P0)$$

avec f et g des fonctions.

Par exemple et, selon un mode de réalisation, le seuil haut Sh et le seuil bas Sb peuvent être simplement déterminés par les relations suivantes :

$$Sh = Kh * \Delta P0$$

avec Kh une constante.

De même le seuil bas est défini par la formule suivante :

$$Sb = Kb * \Delta P0$$

avec Kb une constante.

Encore selon un autre mode de réalisation, des abaques (ou tableaux de correspondance) peuvent permettre de connaître les valeurs des seuils haut et bas en fonction de la valeur de $\Delta P0$ mesurée.

Ainsi et selon cette caractéristique avantageuse de l'invention, la définition du seuil haut Sh et du seuil bas Sb ne nécessite pas de connaître les caractéristiques spécifiques de la cartouche filtrante à tester. Aussi la mise en œuvre du procédé de contrôle et la définition des seuils haut et bas peuvent se faire sans connaître les caractéristiques techniques spécifiques de la cartouche filtrante.

La mise en œuvre du procédé et notamment la prise de décision sur la conformité de ladite au moins une cartouche filtrante peuvent être réalisées sans l'utilisation de moyens informatiques.

Alternativement, et selon un mode de réalisation le procédé peut comprendre les étapes suivantes, mises en œuvre par des moyens informatiques :

- une étape d'émission d'un signal comprenant une mesure relative à la différence de pression $\Delta P$ mesurée lors de l'étape de mesure S1,
- une étape d'enregistrement dans un fichier informatique, à intervalle de temps ou de manière continue, de ladite valeur de différence de pression mesurée.

Les mesures étant effectuées à instant t, ledit procédé peut comprendre une étape de génération d'un fichier informatique comprenant, pour chaque valeur de différence de pression mesurée, un paramètre temporel t représentatif des mesures. Il est ainsi possible de suivre l'évolution de la différence de pression $\Delta P$, en fonction du temps. Le procédé peut ainsi prévoir la génération d'une courbe représentative de l'évolution de la différence de pression $\Delta P$ par rapport au temps t et son affichage sur un écran de contrôle. Typiquement à t=0, la différence de pression mesurée correspond à la différence de pression $\Delta P0$ lorsque la ou les cartouches du système filtrant sont neuves.

La mise en œuvre de moyens informatiques permet encore la réalisation d'une étape de génération d'un signal d'avertissement Ae ; Af lorsque ladite différence de pression mesurée sort de ladite plage comprise entre ledit seuil haut Sh et ledit seuil bas Sb.

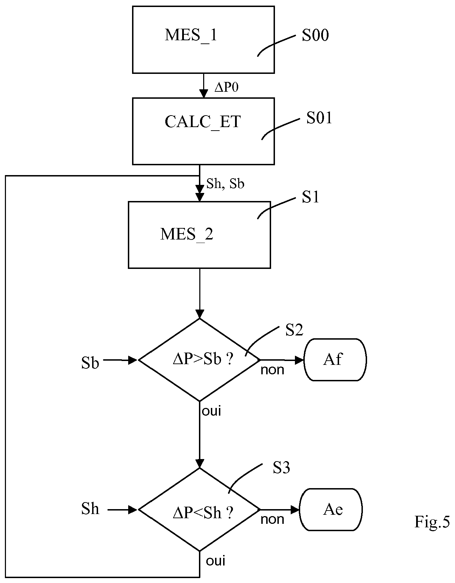

Ainsi et notamment selon le diagramme de la figure 5, le procédé, lorsque mis en œuvre par des moyens informatiques, peut comprendre, après enregistrement dudit seuil haut Sh et/ou dudit seuil bas Sb, les étapes suivantes :

- l'étape de test qui comprend la comparaison de la différence de pression mesurée lors de l'étape de mesure S1 avec ledit seuil bas (étape S2 du diagramme) et le seuil haut (étape S3 du diagramme),
- la génération d'un signal d'avertissement Ae ; Af lorsque ladite différence de pression mesurée atteint le seuil haut Sh ou le seuil bas Sb.

La mise en œuvre de moyens informatiques peut permettre, encore, de réaliser l'étape d'étalonnage S01, automatiquement, et ainsi de générer automatiquement le seuil haut Sh et/ou le seuil bas Sb, après chaque renouvellement des cartouches filtrantes.

Ainsi, les moyens informatiques permettent la réalisation des étapes suivantes :

- mesurer MES_1 et enregistrer la différence de pression $\Delta P0$ (étape S00 du diagramme),
- définir le seuil haut Sh et/ou le seuil bas Sb en relation avec la différence de pression $\Delta P0$ mesurée (étape S01 du diagramme).

Pour l'étape de détermination, du seuil haut et du seuil bas en fonction de ΔP0, on peut utiliser les relations énoncées précédemment.

Ainsi, le procédé complet peut être celui, illustré au diagramme de la figure 5, et qui comprend les étapes suivantes :

- l'étape de mesure S01 (MES_1) pour laquelle on mesure la différence de pression ΔP0 lorsque la ou les cartouches du système filtrant sont neuves,
- l'étape d'étalonnage S02 (CALC_ET) pour laquelle on définit, notamment par calcul, le seuil haut Sh et le seuil bas Sb en relation avec la différence de pression ΔP0,
- l'étape de mesure S1 (MES-2) au cours de laquelle on mesure une différence de pression ΔP représentative de la perte de charge engendrée par le système filtrant F1 ; F2,
- l'étape de test S2 au cours de laquelle on compare ladite différence de pression mesurée lors de l'étape S1 au seuil bas Sb déterminé lors de l'étape S02,
- l'étape de test S3 au cours de laquelle on compare ladite différence de pression mesurée lors de l'étape S1 au seuil bas Sh déterminé lors de l'étape S02.

Selon ce diagramme, et d'une manière générale :

- dans le cas où la différence de pression mesurée lors de l'étape S1 est égale ou inférieure au seuil bas Sb, un signal d'avertissement « fuite » est émis,
- dans le cas où la différence de pression mesurée lors de l'étape S1 est égale ou supérieure au seuil haut Sh, un signal d'avertissement « encrassement » est émis.

Les étapes S1, S2, S3 sont renouvelées, périodiquement, à intervalles de temps réguliers, afin d'assurer une surveillance du système filtrant dans le temps.

La valeur du seuil haut Sh est comprise entre 1.3*ΔP0 et 3*ΔP0, de préférence entre 1.4*ΔP0 et 2*ΔP0, et encore plus préférentiellement entre 1.4 *ΔP0 et 1.6*ΔP0. Dans ce cas, la constante Kh peut ainsi être comprise entre 1.3 et 3, de préférence entre 1.4 et 2 et, plus préférentiellement entre 1.4 et 1.6. Selon les constatations des inventeurs, dans la plupart des cas, à une différence de pression mesurée à 3*ΔP0, ladite au moins une cartouche filtrante en particulier une cartouche stérilisante, peut toujours être considérée comme intègre en ce sens que le gaz filtré peut être considéré comme stérile.

Toutefois, et bien que l'intégrité de ladite au moins une cartouche ne soit pas mise en cause, la perte de charge générée se traduit par une surconsommation importante des compresseurs nécessaires pour la réalisation de la filtration. C'est la raison pour laquelle un seuil haut de valeur inférieure est préférable, notamment compris entre 1.4*ΔP0 et 2*ΔP0, de préférence entre 1.4 *ΔP0 et 1.6*ΔP0. La définition d'un tel seuil haut permet d'éviter ces surconsommations électriques des compresseurs.

Concernant la valeur du seuil bas Sb, cette dernière est comprise entre 0.7*ΔP0 et 0.95*ΔP0, de préférence entre 0.88*ΔP0 et 0.92*ΔP0. La constante Kb peut ainsi être comprise entre 0.7 et 0.95, de préférence entre 0.88 et 0.92.

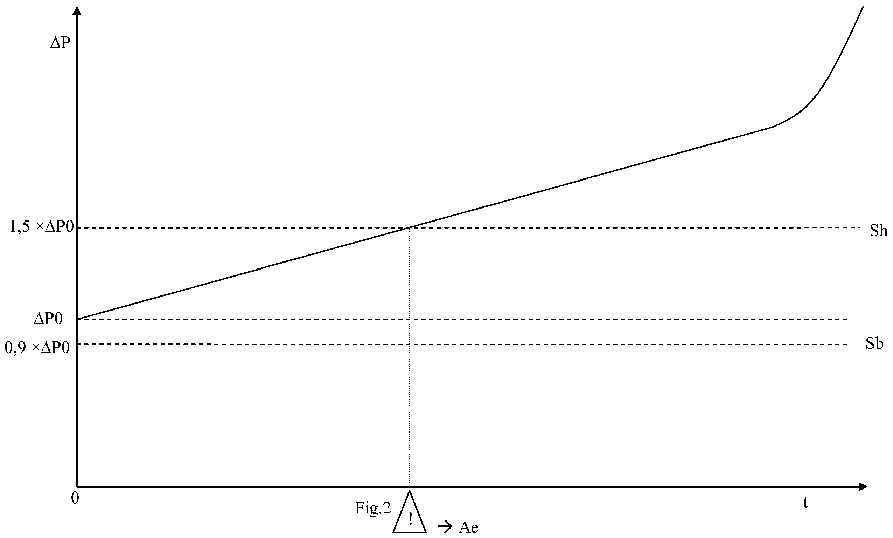

Les figures 2 à 3 illustrent, à titre d'exemples non limitatifs différentes courbes représentatives de différents scénarios pour les cartouches filtrantes contrôlées en ligne.

L'exemple de la figure 2 illustre un premier scénario de l'évolution de la différence de pression mesurée ΔP, depuis t=0 correspondant au renouvellement des cartouches filtrantes du système filtrant. Selon cet exemple, en raison de l'encrassement des cartouches filtrantes, la différence de pression ΔP mesurée à l'étape S1 augmente progressivement jusqu'à atteindre, puis dépasser le seuil haut Sh défini comme 1,5*ΔP0. Lorsque ce seuil haut Sh est atteint, un signal d'avertissement Ae est émis. Ce signal est interprété comme un encrassement trop important. Il est conseillé de renouveler ladite au moins une cartouche filtrante.

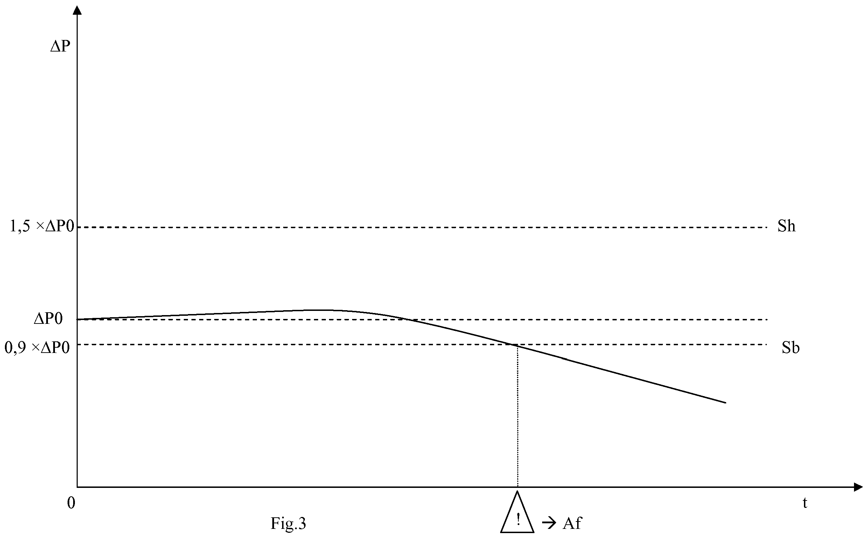

L'exemple de la figure 3 illustre un deuxième scénario de l'évolution de la différence de pression mesurée ΔP, depuis t=0 correspondant au renouvellement des cartouches filtrantes du système filtrant. Selon cet exemple, en raison de l'encrassement des cartouches filtrantes, la différence de pression ΔP mesuré à l'étape S1 augmente progressivement puis commence à diminuer jusqu'à atteindre et descendre en dessous d'un seuil bas défini comme 0,9*ΔP0. Lorsque ce seuil bas Sb est atteint, un signal d'avertissement Af est émis. Ce signal d'avertissement est interprété comme un passage préférentiel dans le système filtrant (une fuite), à savoir un défaut d'intégrité.

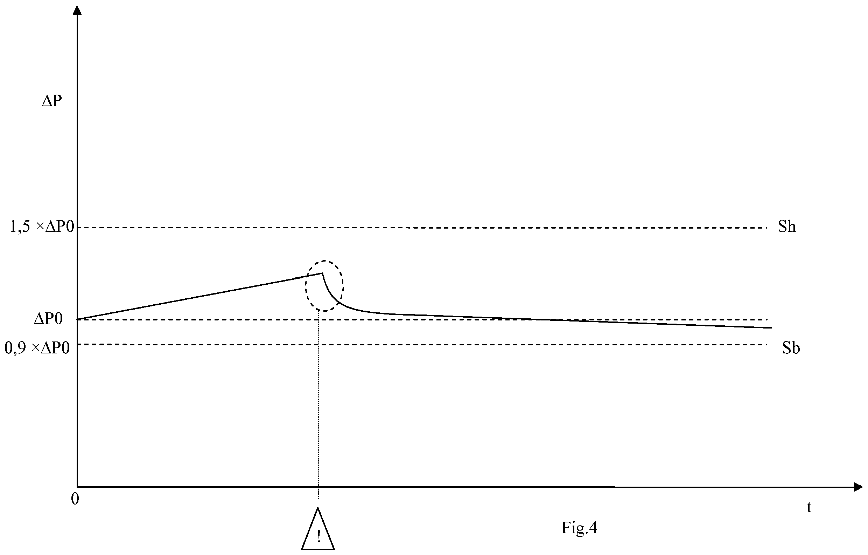

L'exemple de la figure 4 illustre un troisième scénario de l'évolution de la différence de pression mesurée ΔP, depuis t=0 correspondant au renouvellement des cartouches filtrantes du système filtrant. Selon cet exemple, en raison de l'encrassement des cartouches filtrantes, la différence de pression ΔP mesurée à l'étape S1 augmente progressivement puis chute brutalement en restant entre les limites supérieure et inférieure définies par le seuil haut et le seuil bas. L'analyse de la courbe, visuellement ou par des moyens de calculs informatiques peut permettre de détecter une anomalie. Ainsi l'observation d'à-coup et/ou de brusques variations peut être interprétée comme une anomalie sur le circuit de gaz, notamment au niveau du système filtrant.

Essais :

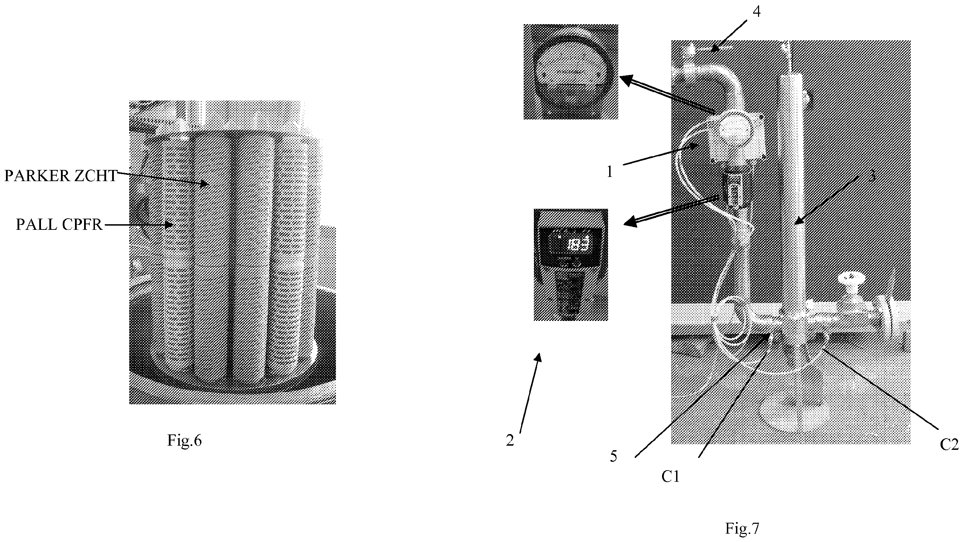

La présente Demanderesse a réalisé des tests préliminaires pour vérifier la pertinence du contrôle de l'intégrité de cartouche filtrante stérilisante, par le suivi de la mesure $\Delta P$, représentative de la perte de charge du système filtrant. Ces essais ont été conduits sur des cartouches filtrantes de diamètre 6 cm. Il s'agit de cartouches stérilisantes réalisant une filtration à 0.01 micromètre. Ces cartouches filtrantes sont utilisées dans un système filtrant illustré à la photo de la figure 6 et dont le carter reçoit 20 cartouches filtrantes.

Ce système filtrant permet de stériliser de l'air qui est ensuite utilisé dans les processus de fermentation par batch, dans le type d'installation illustré à la figure 1. Ces cartouches comprennent des cartouches de la marque PALL CPFR et des cartouches de la marque PARKER ZCHT.

Un banc de test, illustré en photo à la figure 7 a par ailleurs été conçu. Ce banc de test est connecté à la source d'air comprimé usine.

Ce banc de test comprend :

- un débitmètre 2,
- un carter 3 destiné à recevoir une cartouche filtrante à tester,
- un dispositif 1 de mesure de différence de pression, en l'espèce un manomètre différentiel MAGNEHELIC dont l'échelle de mesure de l'affichage s'étend de 0 à 15 kilo Pascals,
- une vanne régulation de débit 4,
- une vanne d'isolement 5.

Ce banc de test permet la mise en œuvre du protocole de test qui comprend les étapes suivantes :

1) S'assurer que le point zéro du manomètre différentiel est correctement ajusté,
2) Placer une cartouche neuve dans le carter 3,
3) Fermer les vannes 4 et 5,
4) Ouvrir la vanne d'alimentation en air du réseau usine,
5) Ouvrir la vanne d'isolement 5,
6) Ouvrir et régler la vanne de régulation de débit 4 jusqu'à lire le débit de test déterminé au débitmètre,
7) Vérifier que le dispositif indique bien la valeur étalon ($\Delta P0$) déterminée pour cette cartouche,
8) Fermer la vanne d'isolement 5,
9) Remplacer la cartouche neuve par une cartouche à contrôler (de même nature),
10) Ouvrir la vanne d'isolement 5,
11) Lire la pression différentielle ($\Delta P$).

Ce banc de test a été utilisé pour contrôler notamment les cartouches filtrantes PALL CPFR, ci-dessus mentionnées, après un an et demi (1,5 an) d'utilisation pour la filtration de l'air utilisé dans les processus de fermentation industrielle.

Pour la mise en œuvre de ce test, les valeurs de débit, de différence de pression $\Delta P0$, du seuil haut Sh et du seuil bas Sb, sont les suivantes :

| Cartouche | | Débit de test à +/- 5 Nm³/h | Pression (1KPa =10mb) | | |
|---|---|---|---|---|---|
| Type | Longueur | | $\Delta P0$ (étalon) | Seuil bas | Seuil haut |
| CPFR | 20P | 180 Nm³/h | 95 mb | 70 mb | 150 mb |

Selon ce test et de manière similaire à l'invention, on considère:

a) Si $\Delta P$ mesuré à l'étape 11 du protocole est inférieur ou égal au seuil bas Sb, la cartouche filtrante est non intègre,
b) Si $\Delta P$ mesuré à l'étape 11 du protocole est supérieur strictement au seuil bas et inférieur strictement au seuil haut, la cartouche est considérée comme intègre et conforme,
c) Si $\Delta P$ mesuré est supérieur ou égal au seuil haut, la cartouche est encrassée et il est préconisé de la changer ; un telle cartouche n'est pas forcément à considérer comme non intègre.

Les cartouches filtrantes usagées ci-dessus mentionnées ont été testées selon ce protocole. Les cartouches dont le ΔP est compris entre le seuil bas et le seuil haut, considérées comme conformes, ont été conservées.

Cinq cartouches considérées comme conformes ont été retournées chez le fabricant pour un test d'intégrité classique, à savoir un test d'aérosol reconnu par le fabricant, réalisé sur un appareil « Valairdata II type WVA203FFV » de la Société PARKER HANNIFIN, et par la Société PALL, sur un appareil « Integrity test Flowstar IV ».

Toutes les cartouches considérées comme conformes selon le protocole de test ont été considérées comme intègres par le fabricant.

NOMENCLATURE

1. Dispositif de mesure d'une différence de pressions,
2. Débitmètre (banc de test),
3. Carter (banc de test),
4. Vanne régulation de débit (banc de test),
5. Vanne d'isolement (banc de test),

Ae. Signal d'encrassement,
Af. Signal fuite,
C1. Première connexion pression,
C2. Deuxième connexion pression,
F1 ; F2. Système filtrant,
R. Réacteur de fermentation,
Sh. Seuil haut,
Sb. Seuil bas,
ΔP. Différence de pression (Etape S1),
ΔP0. Différence de pression (pour système filtrant à cartouche(s) neuve(s)),

## Revendications

1. Procédé de contrôle en ligne de l'intégrité d'un système filtrant (F1 ; F2) mis en œuvre au cours d'un processus industriel comportant la filtration d'un gaz au travers dudit système filtrant, ledit système filtrant (F1; F2) comprenant au moins une cartouche filtrante,
ledit procédé comprenant une étape préalable de mesure (S01) de la différence de pression ΔP0 représentative de la perte de charge engendrée par le système filtrant lorsque ladite au moins une cartouche filtrante est neuve, et une étape d'étalonnage au cours de laquelle on détermine, en fonction de ladite différence de pression ΔP0 mesurée, un seuil haut (Sh) représentatif d'un encrassement de ladite au moins une cartouche filtrante et un seuil bas (Sb) représentatif d'une fuite de ladite au moins une cartouche filtrante, ledit seuil haut (Sh) étant supérieur à ΔP0, la valeur du seuil haut (Sh) comprise entre 1.3*ΔP0 et 3*ΔP0, et ledit seuil bas (Sb) inférieur à ΔP0, ladite valeur du seuil bas comprise entre 0.7*ΔP0 et 0.95*ΔP0, procédé comportant au moins les étapes suivantes :

   - une étape de mesure (S1) au cours de laquelle on mesure une différence de pression ΔP représentative de la perte de charge engendrée par le système filtrant (F1 ; F2),
   - une étape (S2, S3) de test au cours de laquelle on compare ladite mesure (S1) audit seuil haut (Sh), prédéterminé, et audit seuil bas (Sb) prédéterminé, de sorte à considérer ladite au moins une cartouche filtrante non conforme lorsque la différence de pression mesurée à l'étape de mesure (S1) sort d'une plage comprise entre ledit seuil haut (Sh) et ledit seuil bas (Sb).

2. Procédé selon la revendication 1, dans lequel la valeur du seuil haut (Sh) est comprise entre 1.4*ΔP0 et 2*ΔP0.

3. Procédé selon la revendication 2, dans lequel la valeur du seuil haut (Sh) est comprise entre 1.4*ΔP0 et 1.6ΔP0.

4. Procédé selon l'une quelconque des revendications 1 à 3, dans lequel la valeur du seuil bas (Sb) est comprise entre 0.88*ΔP0 et 0.92*ΔP0.

5. Procédé selon l'une des revendications 1 à 4, dans lequel la mesure de la différence de pression réalisée lors de l'étape de mesure (S1) est effectuée au moyen d'un dispositif de mesure d'une différence de pression présentant une sensibilité inférieure à 750 Pascals, de préférence inférieure ou égale à 300 Pascals, et encore plus préférentiellement comprise entre 50 Pascals et 200 Pascals, ledit dispositif présentant une première connexion de pression (C1), en aval du système filtrant et une seconde connexion de pression (C2), en amont du système filtrant.

6. Procédé selon l'une des revendications 1 à 5, comprenant les étapes suivantes, mis en œuvre par des moyens informatiques :

   - une étape d'émission d'un signal comprenant une mesure relative à la différence de pression ∆P mesurée lors de l'étape de mesure (S1),
   - une étape d'enregistrement dans un fichier informatique, à intervalle de temps ou de manière continue, de ladite valeur de différence de pression mesurée.

7. Procédé selon la revendication 6 comprenant une étape de génération d'un signal d'avertissement (Ae ; Af) lorsque ladite différence de pression mesurée sort de ladite plage comprise entre ledit seuil haut (Sh) et ledit seuil bas (Sb).

8. Procédé selon l'une des revendications 1 à 7, dans lequel le système filtrant (F1 ; F2) comprend une pluralité de cartouches filtrantes, ladite différence de pression mesurée à l'étape de mesure (S1) étant représentative de la perte de charge engendrée par l'ensemble des cartouches filtrantes.

9. Procédé selon l'une des revendications 1 à 8, dans lequel la sensibilité de mesure est inférieure à 750 Pascals, de préférence inférieure ou égale à 300 Pascals, et encore plus préférentiellement comprise entre 50 Pascals et 200 Pascals.

10. Procédé selon l'une des revendications 1 à 9, dans lequel l'échelle de mesure comprend une plage d'étendue comprise entre 75000 Pascals et 450 000 Pascals, de préférence entre 75 000 Pascals et 300 000 Pascals, et encore plus préférentiellement comprise entre 75 000 Pascals et 200 000 Pascals.

11. Utilisation d'un procédé selon l'une des revendications 1 à 10, dans laquelle le processus industriel est un processus industriel présentant des débits normaux de gaz audit système filtrant supérieurs à 100 Nm$^3$/H.

12. Utilisation d'un procédé selon l'une des revendications 1 à 10, dans laquelle le processus industriel est un processus industriel pour lequel ladite filtration est une filtration stérilisante.

13. Utilisation du procédé selon la revendication 12 dans laquelle le processus industriel est un processus industriel de fermentation et dans laquelle le système filtrant (F1 ; F2) est utilisé pour traiter de l'air alimentant le réacteur de fermentation (R) ou la cuve d'une matière (Gl) telle que le glucose alimentant le réacteur de fermentation (R).

**Patentansprüche**

1. Verfahren zur Online-Kontrolle der Unversehrtheit eines Filtersystems (F1; F2), das während eines industriellen Prozesses durchgeführt wird, umfassend das Filtrieren eines Gases durch das Filtersystem, wobei das Filtersystem (F1; F2) mindestens eine Filterpatrone umfasst, wobei das Verfahren einen vorausgehenden Messschritt (S01) der Druckdifferenz ∆P0, die für den Druckverlust repräsentativ ist, der durch das Filtersystem erzeugt wird, wenn die mindestens eine Filterpatrone neu ist, und einen Kalibrierungsschritt während dem, als Funktion der gemessenen Druckdifferenz ∆P0, eine hohe Schwelle (Sh), die für eine Verschmutzung der mindestens einen Filterpatrone repräsentativ ist, und eine niedrige Schwelle (Sb), die für eine Undichtigkeit der mindestens einen Filterpatrone repräsentativ ist, bestimmt wird, wobei die hohe Schwelle (Sh) größer als ∆P0 ist, der Wert der hohen Schwelle (Sh) zwischen 1,3 * ∆P0 und 3 * ∆P0 liegt und die niedrige Schwelle (Sb) kleiner als ∆P0 ist, der Wert der niedrigen Schwelle zwischen 0,7 * ∆P0 und 0,95 * ∆P0 liegt, umfasst, wobei das Verfahren mindestens die folgenden Schritte umfasst:

   - einen Messschritt (S1), während dem eine Druckdifferenz ∆P gemessen wird, die für den Druckverlust repräsentativ ist, der durch das Filtersystem (F1; F2) erzeugt wird,
   - einen Testschritt (S2, S3), während dem die Messung (S1) mit der vorbestimmten, hohen Schwelle (Sh) und mit der vorbestimmten, niedrigen Schwelle (Sb) verglichen wird, um die mindestens eine Filterpatrone als nicht konforme zu betrachten, wenn die im Messschritt (S1) gemessenen Druckdifferenz einen Bereich zwischen der hohen Schwelle (Sh) und der niedrigen Schwelle (Sb) verlässt.

**2.** Verfahren nach Anspruch 1, wobei der Wert der hohen Schwelle (Sh) zwischen 1,4 * ΔP0 und 2 * ΔP0 liegt.

**3.** Verfahren nach Anspruch 2, wobei der Wert der hohen Schwelle (Sh) zwischen 1,4 * ΔP0 und 1,6ΔP0 liegt.

**4.** Verfahren nach einem der Ansprüche 1 bis 3, wobei der Wert der niedrigen Schwelle (Sb) zwischen 0,88 * ΔP0 und 0,92 * ΔP0 liegt.

**5.** Verfahren nach einem der Ansprüche 1 bis 4, wobei die Messung der Druckdifferenz, die während des Messschritts (S1) durchgeführt wird, mittels einer Vorrichtung zum Messen einer Druckdifferenz mit einer Empfindlichkeit von weniger als 750 Pascal, vorzugsweise weniger als oder gleich 300 Pascal und noch bevorzugter zwischen 50 Pascal und 200 Pascal durchgeführt wird, wobei die Vorrichtung einen ersten Druckanschluss (C1) dem Filtersystem nachgelagert und einen zweiten Druckanschluss (C2) dem Filtersystem vorgelagert aufweist.

**6.** Verfahren nach einem der Ansprüche 1 bis 5, umfassend die folgenden Schritte, durchgeführt durch Datenverarbeitungsmittel:

- einen Schritt eines Sendens eines Signals, umfassend eine Messung in Bezug auf die während des Messschritts (S1) gemessene Druckdifferenz ΔP;
- ein Schritt eines Aufzeichnens des gemessenen Druckdifferenzwerts in einer Computerdatei in Zeitintervallen oder kontinuierlich.

**7.** Verfahren nach Anspruch 6, umfassend einen Schritt eines Erzeugens eines Warnsignals (Ae; Af), wenn die gemessene Druckdifferenz den Bereich zwischen der hohen Schwelle (Sh) und der niedrigen Schwelle (Sb) verlässt.

**8.** Verfahren nach einem der Ansprüche 1 bis 7, wobei das Filtersystem (F1; F2) eine Vielzahl an Filterpatronen umfasst, wobei die im Messschritt (S1) gemessene Druckdifferenz repräsentativ für den Druckverlust ist, der von der Gesamtheit der Filterpatronen erzeugt wird.

**9.** Verfahren nach einem der Ansprüche 1 bis 8, wobei die Messempfindlichkeit weniger als 750 Pascal, vorzugsweise weniger als oder gleich 300 Pascal und noch bevorzugter zwischen 50 Pascal und 200 Pascal beträgt.

**10.** Verfahren nach einem der Ansprüche 1 bis 9, wobei die Messskala einen Bereich zwischen 75.000 Pascal und 450.000 Pascal, vorzugsweise zwischen 75.000 Pascal und 300.000 Pascal und noch bevorzugter zwischen 75.000 Pascal und 200.000 Pascal umfasst.

**11.** Verwendung eines Verfahrens nach einem der Ansprüche 1 bis 10, wobei der industrielle Prozess ein industrieller Prozess mit normalen Gasdurchflüssen des Filtersystems von mehr als 100 Nm$^3$/H ist.

**12.** Verwendung eines Verfahrens nach einem der Ansprüche 1 bis 10, wobei der industrielle Prozess ein industrieller Prozess ist, für den die Filtration eine Sterilisationsfiltration ist.

**13.** Verwendung des Verfahrens nach Anspruch 12, wobei der industrielle Prozess ein industrieller Fermentationsprozess ist und wobei das Filtersystem (F1; F2) verwendet wird, um die Luft zu behandeln, die dem Fermentationsreaktor (R) oder dem Behälter eines Materials (G1) wie Glucose, das dem Fermentationsreaktor (R) zugeführt wird, zugeführt wird.

**Claims**

**1.** Method for in-line control of the integrity of a filtering system (F1; F2) implemented in an industrial process involving the filtration of a gas through said filtering system, said filtering system (F1; F2) comprising at least one filter cartridge, said method comprising a preliminary step (S01) for measuring the pressure difference ΔP0 representative of the head loss generated by the filtering system when said at least one filter cartridge is new, and a calibration step during which an upper threshold (Sh) representative of a fouling of said at least one filter cartridge and a lower threshold (Sb) representative of a leak in said at least one filter cartridge are determined, as a function of said measured pressure difference ΔP0, said upper threshold (Sh) being greater than ΔP0, the value of the upper threshold (Sh) lying in the range 1.3*ΔP0 to 3*ΔP0, and said lower threshold (Sb) being less than ΔP0, said value of the lower threshold lying in the range 0.7*ΔP0 to 0.95*ΔP0, which method includes at least the following steps:

- a measuring step (S1) during which a pressure difference ∆P, representative of the head loss generated by the filtering system (F1; F2), is measured,
- a testing step (S2, S3) during which said measurement (S1) is compared with said predetermined upper threshold (Sh) and with said predetermined lower threshold (Sb), in such a way as to consider said at least one filter cartridge to be non-compliant when the pressure difference measured in the measuring step (S1) falls outside a range that is included between said upper threshold (Sh) and said lower threshold (Sb).

2. Method according to claim 1, wherein the value of the upper threshold (Sh) lies in the range $1.4*\Delta P0$ to $2*\Delta P0$.

3. Method according to claim 2, wherein the value of the upper threshold (Sh) lies in the range $1.4*\Delta P0$ to $1.6\Delta P0$.

4. Method according to any of claims 1 to 3, wherein the value of the lower threshold (Sb) lies in the range $0.88*\Delta P0$ to $0.92*\Delta P0$.

5. Method according to one of claims 1 to 4, wherein the measurement of the pressure difference made during the measuring step (S1) is carried out by means of a pressure difference measuring device having a sensitivity of less than or equal to 750 Pascals, preferably less than or equal to 300 Pascals, and more preferably within the range 50 Pascals to 200 Pascals, said device having a first pressure connection (C1) downstream of the filtering system and a second pressure connection (C2) upstream of the filtering system.

6. Method according to one of claims 1 to 5, comprising the following steps, implemented by computer-based means:

   - a step of transmitting a signal comprising a measurement relative to the pressure difference ∆P measured during the measuring step (S1),
   - a step of recording said measured pressure difference value in a data processing file at time intervals or in a continuous manner.

7. Method according to claim 6, comprising a step of generating a warning signal (Ac; Af) when said measured pressure difference falls outside said range between said upper threshold (Sh) and said lower threshold (Sb).

8. Method according to one of claims 1 to 7, wherein the filtering system (F1; F2) comprises a plurality of filter cartridges, said pressure difference measured in the measuring step (S1) being representative of the head loss generated by all filter cartridges.

9. Method according to one of claims 1 to 8, wherein the measurement sensitivity is less than 750 Pascals, preferably less than or equal to 300 Pascals, and more preferably in the range 50 Pascals to 200 Pascals.

10. Method according to one of claims 1 to 9, wherein the measurement scale comprises an extended range between 75,000 Pascals and 450,000 Pascals, preferably between 75,000 Pascals and 300,000 Pascals, and more preferably in the range 75,000 Pascals to 200,000 Pascals.

11. Use of a method according to one of claims 1 to 10, wherein the industrial process is an industrial process providing normal gas flow rates to said filtering system of greater than 100 $Nm^3/H$.

12. Use of a method according to one of claims 1 to 10, wherein the industrial process is an industrial process for which said filtration is a sterilising filtration.

13. Use of the method according to claim 12, wherein the industrial process is an industrial fermentation process and wherein the filtering system (F1; F2) is used to treat the air supplying the fermentation reactor (R) or the tank containing a material (G1) such as the glucose supplying the fermentation reactor (R).

Fig.1

Fig.2

EP 3 142 770 B1

Fig.3

Fig.4

```
                    ┌─────────────┐
                    │    MES_1     │────── S00
                    └─────────────┘
                           │ ΔP0
                           ▼
                    ┌─────────────┐
                    │   CALC_ET    │────── S01
                    └─────────────┘
                           │ Sh, Sb
                           ▼
                    ┌─────────────┐
                    │    MES_2     │────── S1
                    └─────────────┘
                           │
                           ▼
                          ╱ ╲
                         ╱   ╲ ─── S2
             Sb ───▶   ╱ ΔP>Sb ? ╲   non   ┌──────┐
                       ╲          ╱ ──────▶ │  Af  │
                        ╲        ╱          └──────┘
                          ╲ ╱
                        oui │
                            ▼
                          ╱ ╲
                         ╱   ╲ ─── S3
             Sh ───▶   ╱ ΔP<Sh ? ╲   non   ┌──────┐
                       ╲          ╱ ──────▶ │  Ae  │
                        ╲        ╱          └──────┘
                          ╲ ╱
                        oui │
```

Fig.5

Fig.7

PARKER ZCHT

PALL CPFR

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013049109 A